# FASCICULE DE BREVET EUROPEEN

(11) **EP 2 090 487 B1**
(45) Date de publication et mention de la délivrance du brevet: **29.08.2012**
(21) Numéro de dépôt: 09152221.9
(22) Date de dépôt: 05.02.2009
(51) Int. Cl.: F02D 29/00, F16H 61/04, F02D 17/00, F16H 61/20, B60K 28/04, B60W 50/08, B60W 10/06, B60W 10/10, B60W 30/18

(54) **Procédé de gestion de l'avancement d'un véhicule muni d'un système d'arrêt et de redémarrage automatique du moteur**
Verfahren zur Steuerung der Vorwärtsbewegung eines Fahrzeugs, das mit einem automatischen Stopp- und Wiederanlasssystem des Motors ausgestattet ist
Method of managing the forward movement of a vehicle equipped with a system for automatically stopping and restarting the engine

(30) Priorité: 13.02.2008 FR 0850898
(43) Date de publication de la demande: 19.08.2009
(73) Titulaire: Peugeot Citroën Automobiles SA, 78140 Vélizy-Villacoublay (FR)
(72) Inventeur: Condemine, Eric, 91170, Viry Chatillon (FR)
(74) Mandataire: Ménès, Catherine

(56) Documents cités:
- DE-A1- 10 040 094
- DE-A1- 19 926 697
- JP-A- 2004 340 206

## Description

La présente invention concerne un procédé de gestion de l'avancement d'un véhicule muni d'un moteur thermique, d'une boite de vitesses pilotée par un superviseur et d'un système d'arrêt et de redémarrage automatique du moteur.

Afin de diminuer la pollution des véhicules fonctionnant avec un moteur thermique, les véhicules sont parfois équipés d'un système permettant l'arrêt et le redémarrage automatique du moteur thermique (système « Stop & Start ») lorsque le véhicule s'arrête, par exemple lorsqu'il est à l'arrêt à un feu rouge. Suite à une indication de la volonté du conducteur de vouloir redémarrer (par exemple, un levé de pied de la pédale de frein par le conducteur ou un appui sur la pédale d'accélérateur), le moteur thermique se remet automatiquement en marche et le véhicule démarre. Au redémarrage du moteur thermique, un rapport de boite de vitesses est enclenché par le superviseur de boite de vitesses de façon à faire avancer le véhicule sans délais.

Cependant, le moteur peut aussi être automatiquement redémarré si un besoin extérieur apparaît pour le bon fonctionnement du véhicule (par exemple pour recharger la batterie dont la charge serait devenue insuffisante pour redémarrer le moteur). La situation peut alors être dangereuse si l'avancement du véhicule n'a pas été demandé par le conducteur et si ce dernier, distrait, est surpris par le redémarrage du moteur, un obstacle pouvant être présent devant le véhicule. Par exemple, lorsqu'un conducteur d'un tel véhicule arrive devant la porte fermée de son garage, il va arrêter le véhicule en gardant le pied sur la pédale de frein et le moteur va s'arrêter automatiquement. S'il fait nuit et que les phares du véhicule sont allumés, la charge de la batterie peut vite devenir insuffisante pour assurer le redémarrage automatique du moteur sur la volonté du conducteur si ce dernier tarde trop à redémarrer ou à couper son moteur.

Le contrôleur du système Stop & Start va alors commander le redémarrage du moteur de façon à recharger la batterie. Le conducteur peut être surpris par le redémarrage du moteur et si son attention n'était plus concentrée sur la conduite du véhicule (par exemple le conducteur peut être en train de consulter des documents ou être distrait par un enfant assis à l'arrière du véhicule), son pied peut ne plus être complètement appuyé sur la pédale de frein (sans avoir franchi le seuil de déclenchement de redémarrage) et le véhicule peut commencer à avancer, en heurtant les obstacles situés devant le véhicule, par exemple la porte du garage.

Pour éviter ce genre de difficultés, la demande de brevet WO 03/076226, qui concerne un régulateur de vitesse couplé avec un système « stop & go », propose d'inhiber la fonction « stop & go ». La présente invention propose un procédé qui répond aux impératifs de sécurité de fonctionnement des véhicules équipés d'un système d'arrêt et de redémarrage automatique du moteur thermique et d'une boite de vitesses pilotée par un superviseur.

De façon plus précise, l'invention concerne un procédé de gestion de l'avancement d'un véhicule muni d'un moteur thermique, d'un système d'arrêt et de redémarrage automatique du moteur thermique et d'une boite de vitesses pilotée par un superviseur. Le procédé consiste à piloter la boite de vitesses afin d'autoriser ou d'interdire l'avancement du véhicule en fonction de conditions prédéterminées. Ces conditions prédéterminées peuvent concerner la présence ou l'absence du conducteur dans le véhicule et la présence ou l'absence d'un obstacle devant le véhicule et un besoin du véhicule.
Le document JP 2004 340 206 concerne un système qui anticipe le rédemarrage d'un véhicule en reconnaissant le déplacement du pied du conducteur à la pédale accélérateur, mais où le déplacement est relié à la condition qu'il n'y ait pas d'obstacles devant le véhicule.

Les conditions concernant le conducteur peuvent être le bouclage de la ceinture de sécurité et/ou la présence du conducteur sur son siège.

La présence ou l'absence d'un obstacle peut être déterminée par un système de radar situé à l'avant du véhicule.

Le besoin du véhicule peut se manifester par la nécessité de redémarrer le moteur thermique, par exemple pour la recharge de la batterie, la dépression insuffisante dans le système d'amplification de freinage de type ISOVAC ou la mise en marche de la climatisation ou de la ventilation du véhicule.

Lorsque le moteur thermique a été redémarré à l'initiative du conducteur, la détection d'un obstacle devant le véhicule est avantageusement effectué et, si un obstacle est détecté, le superviseur interdit l'avancement du véhicule en positionnant la boite de vitesses dans une position pour laquelle aucun couple mécanique n'est transmis aux roues du véhicule. Par contre, si aucun obstacle n'est détecté, le superviseur autorise l'avancement du véhicule en positionnant la boite de vitesses dans une position pour laquelle un couple mécanique est transmis aux roues motrices du véhicule.

Lorsque le moteur thermique a été redémarré pour satisfaire un besoin du véhicule, le superviseur peut interdire l'avancement du véhicule en positionnant la boite de vitesses dans une position pour laquelle aucun couple mécanique n'est transmis aux roues du véhicule. Après un temps prédéterminé (par exemple deux secondes), le superviseur positionne la boite de vitesses dans une position pour laquelle un couple est transmis aux roues motrices du véhicule. Alternativement, si le conducteur manifeste son intention d'avancer le véhicule, le superviseur peut positionner la boite de vitesses dans une position pour laquelle un couple est transmis aux roues motrices du véhicule.

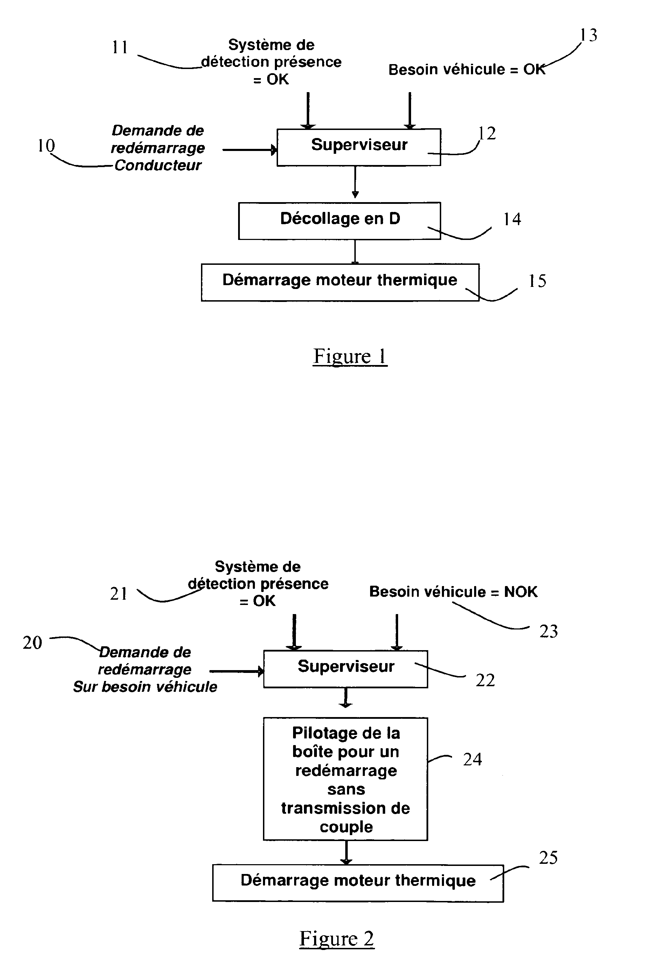

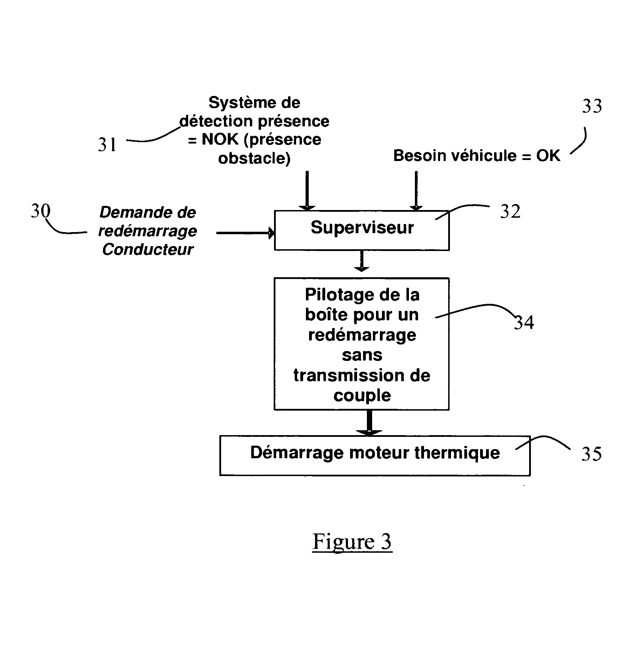

D'autres avantages et caractéristiques de l'invention apparaîtront au cours de la description qui suit d'un mode de réalisation de l'invention, donné à titre d'exemple non limitatif, en référence aux dessins annexés et sur lesquels :
■ la figure 1 illustre le procédé de l'invention dans le cas d'une situation ne présentant pas de danger,
■ la figure 2 illustre le procédé de l'invention dans le cas d'une demande de redémarrage du moteur pour satisfaire un besoin du véhicule, et
■ la figure 3 illustre le procédé de l'invention dans le cas où un obstacle a été détecté.

La remise en mouvement d'un véhicule équipé d'une boite de vitesses pilotée par un superviseur de boite (cas d'une boite automatique ou robotisée par exemple) et d'un système d'arrêt et de redémarrage automatique du moteur thermique du véhicule (tel que le système Stop & Start) peut poser des problèmes de sécurité. La remise en marche se déroule en deux étapes : le redémarrage du moteur thermique et le décollage ou « rampage » du véhicule (c'est-à-dire l'avancement du véhicule lorsque le moteur est en marche, un rapport de boite de vitesses étant enclenché (par exemple levier de vitesse dans la position Drive pour une boite automatique) et les freins du véhicule cessent d'être sollicités). La remise en marche du moteur et l'enclenchement d'un rapport de boite s'enchaînent rapidement pour permettre à l'utilisateur d'accélérer le plus tôt possible mais de manière souple afin d'éviter des à-coups liés à la transmission de couple mécanique aux roues motrices du véhicule. Cependant, ces deux étapes étant automatiques, il peut y avoir danger si l'utilisateur ne contrôle pas, ou mal, la situation.

Selon le procédé de l'invention (figure 1), la boite de vitesses est pilotée de façon à ne transmettre du couple aux roues motrices que si des conditions prédéterminées sont remplies. Ainsi, sur la figure 1 qui concerne le cas où le redémarrage du moteur thermique est demandé par le conducteur (référence 10), par exemple en relâchant le pied de la pédale de freins, le superviseur s'assure, d'une part, de la présence du conducteur et, d'autre part, de l'absence d'obstacles devant le véhicule (référence 11). La présence du conducteur peut être déterminée à l'aide d'un ou plusieurs capteurs dans le siège conducteur et/ou d'un capteur de bouclage de la ceinture de sécurité. La détection d'un obstacle devant le véhicule est réalisable à l'aide de radars situés à l'avant du véhicule, ces radars étant habituellement utilisés pour faciliter les manoeuvres de parking. Ces informations de présence sont transmises à un superviseur de boite de vitesses 12.

De plus, selon ce procédé, on vérifie qu'il n'existe pas de besoin de redémarrer le moteur thermique pour le bon fonctionnement du véhicule et de la fonction Stop & Start (référence 13). Un besoin de redémarrer le moteur peut être la nécessité de recharger la batterie utilisée pour le redémarrage du moteur dans la fonction Stop & Start, dans le cas où la charge serait insuffisante pour redémarrer le moteur à l'aide de cette fonction. Un autre besoin peut être dû à une dépression insuffisante dans l'amplificateur du système de freinage (système Mastervac). Il est alors nécessaire de remettre en marche le moteur afin d'obtenir un niveau de dépression suffisant pour permettre le bon fonctionnement du système de freinage. Un autre besoin peut être par exemple une demande de climatisation ou de ventilation.

Si aucun besoin n'a été détecté (« besoin véhicule = OK ») et si le système de détection de présence a bien détecté la présence du conducteur et l'absence d'obstacle (« Système de détection présence = OK »), le superviseur 12 pilote la boite de vitesses de façon à transmettre du couple mécanique aux roues motrices (14), par exemple en position Drive pour une boite automatique et autorise le redémarrage du moteur thermique (15). Le décollage ou rampage du véhicule s'effectue alors en position Drive (D) pour laquelle du couple est transmis aux roues motrices du véhicule.

La figure 2 illustre une situation pour laquelle il existe un besoin du véhicule (référence 23) de redémarrer le moteur thermique (« Besoin véhicule = NOK »). Ce besoin, comme expliqué plus haut, peut être provoqué par exemple par la faiblesse de la charge de la batterie, par la dépression insuffisante de l'amplificateur de freinage ou encore par une demande de climatisation ou de ventilation. La demande 20 de redémarrage du moteur thermique est envoyée au superviseur 22 du système d'arrêt et de redémarrage automatique du moteur thermique, lequel s'assure que le système de détection de présence 21 ne signale rien d'anormal (le conducteur est bien assis sur son siège et il n'y a pas d'obstacle devant le véhicule : « Système de détection de présence = OK »).

Le superviseur 22 pilote la boite de vitesses de sorte qu'aucun couple mécanique ne soit transmis aux roues motrices (référence 24) et le moteur thermique est alors redémarré (référence 25). S'il s'agit d'une boite de vitesses automatique, avant de redémarrer le moteur thermique, le superviseur positionne la boite par exemple sur la position Neutre (N). Après un temps prédéterminé, par exemple deux secondes, le superviseur autorise le passage de couple aux roues motrices, en positionnant la boite automatique sur la position Drive (D) par exemple. Alternativement, si le conducteur manifeste son intention d'avancer le véhicule, en accélérant par exemple, le superviseur autorise le passage de couple aux roues motrices.

La figure 3 illustre une situation dans laquelle le conducteur demande le redémarrage du moteur thermique (référence 30), par exemple avec un système Stop & Start en relâchant le pied de la pédale de frein, et un obstacle a été détecté par le système de détection de présence 31 (« Système de détection présence = NOK »). D'autre part, aucun besoin du véhicule nécessitant le redémarrage du moteur thermique n'a été détecté (référence 33 : « Besoin véhicule = OK »). Le superviseur 32 pilote alors la boite de vitesses de sorte qu'aucun couple mécanique ne soit transmis aux roues motrices (référence 34) et le moteur thermique est redémarré (référence 35). Le véhicule n'avance donc pas, bien que le moteur thermique soit en marche. Lorsque l'obstacle a disparu (« Système de détection de présence = OK »), le superviseur autorise alors la transmission de couple aux roues motrices en positionnant la boite de vitesses sur un rapport approprié (par exemple position D pour une boite automatique).

En plus de ne pas transmettre de couple aux roues, le superviseur peut commander le blocage des freins (par exemple en activant un frein à main électrique) et/ou activer un signal sonore pour attirer l'attention du conducteur.

La détection de présence peut également comprendre un système de détection de l'attention du conducteur (système appelé « eye tracker »).

D'autres modes de réalisation que ceux décrits et représentés peuvent être conçus par l'homme du métier sans sortir du cadre de la présente invention. Par exemple, l'invention a été décrite à l'aide d'un système Stop & Start et d'une boite de vitesses automatique : il est évident que l'invention s'applique à tous systèmes d'arrêt et de redémarrage automatique du moteur thermique et à toutes boites de vitesses pilotées par un superviseur.

## Revendications

1. Procédé de gestion de l'avancement d'un véhicule muni d'un moteur thermique, d'un système d'arrêt et de redémarrage automatique du moteur thermique et d'une boite de vitesses pilotée par un superviseur (12), le procédé étant **caractérisé en ce qu'**il consiste à piloter la boite de vitesses afin d'interdire l'avancement du véhicule si le moteur thermique est redémarré pour satisfaire un besoin du véhicule (13, 23, 33) et que sont remplies des conditions prédéterminées concernant la présence ou l'absence du conducteur dans le véhicule et la présence ou l'absence d'un obstacle devant le véhicule (11, 21, 31).

2. Procédé de gestion selon la revendication 1, **caractérisé en ce que** l'avancement du véhicule est interdit en positionnant la boite de vitesses dans une position pour laquelle aucun couple mécanique n'est transmis aux roues du véhicule (24).

3. Procédé selon la revendication 1 ou la revendication 2 **caractérisé en ce que** lesdites conditions concernant le conducteur sont le bouclage de la ceinture de sécurité et/ou la présence du conducteur sur son siège.

4. Procédé selon la revendication 1 **caractérisé en ce que** la présence ou l'absence d'un obstacle est déterminée par un système de radar situé à l'avant du véhicule.

5. Procédé l'une quelconque des revendications 1 à 4, **caractérisé en ce que** ledit besoin du véhicule peut être la recharge de la batterie, la dépression insuffisante du système de freinage, la mise en marche de la climatisation ou de la ventilation du véhicule.

6. Procédé selon l'une des revendications précédentes **caractérisé en ce que** lorsque le moteur thermique a été redémarré à l'initiative du conducteur (10, 30), la détection d'un obstacle devant le véhicule est effectué et, si un obstacle est détecté, le superviseur interdit l'avancement du véhicule en positionnant la boite de vitesses dans une position pour laquelle aucun couple mécanique n'est transmis aux roues du véhicule (34) et, si aucun obstacle n'est détecté, le superviseur autorise l'avancement du véhicule en positionnant la boite de vitesses dans une position pour laquelle un couple mécanique est transmis aux roues motrices du véhicule (14).

7. Procédé selon l'une quelconque des revendications précédentes, **caractérisé en ce que**, après un temps prédéterminé pendant lequel le l'avancement du véhicule est interdit, le superviseur (22) positionne la boite de vitesses dans une position pour laquelle un couple est transmis aux roues motrices du véhicule.

8. Procédé selon la revendication 7 **caractérisé en ce que** ledit temps prédéterminé est voisin de deux secondes.

## Claims

1. A method of managing the forward movement of a vehicle equipped with a heat engine, a system for automatically stopping and restarting the heat engine and a gearbox controlled by a supervisor (12), the method being **characterized in that** it consists of controlling the gearbox so as to prohibit the forward movement of the vehicle if the heat engine is restarted to meet a need of the vehicle (13, 23, 33) and that predetermined conditions are fulfilled concerning the presence or absence of the driver in the vehicle and the presence or absence of an obstacle in front of the vehicle (11, 21, 31).

2. The management method according to Claim 1, **characterized in that** the forward movement of the vehicle is prohibited by positioning the gearbox in a position for which no mechanical torque is transmitted to the wheels of the vehicle (24).

3. The method according to Claim 1 or Claim 2, **characterized in that** the said conditions concerning the driver are the buckling of the safety belt and/or the presence of the driver on his seat.

4. The method according to Claim 1, **characterized in that** the presence or absence of an obstacle is determined by a radar system situated at the front of the vehicle.

5. The method according to any one of Claims 1 to 4, **characterized in that** the said need of the vehicle can be the recharging of the battery, the insufficient depression of the braking system, the start-up of the air conditioning or of the ventilation of the vehicle.

6. The method according to one of the preceding claims, **characterized in that** when the heat engine has been restarted on the initiative of the driver (10, 30), the detection of an obstacle in front of the vehicle is carried out and, if an obstacle is detected, the supervisor prohibits the forward movement of the vehicle by positioning the gearbox in a position for which no mechanical torque is transmitted to the wheels of the vehicle (34) and, if no obstacle is detected, the supervisor authorizes the forward movement of the vehicle by positioning the gearbox in a position for which a mechanical torque is transmitted to the drive wheels of the vehicle (14).

7. The method according to any one of the preceding claims, **characterized in that**, after a predetermined time during which the forward movement of the vehicle is prohibited, the supervisor (22) positions the gearbox in a position for which a torque is transmitted to the drive wheels of the vehicle.

8. The method according to Claim 7, **characterized in that** the said predetermined time is close to two seconds.

## Patentansprüche

1. Verfahren zur Steuerung der Vorwärtsbewegung eines Fahrzeugs, das mit einem Verbrennungsmotor, mit einem automatischen Stopp- und Wiederanlasssystem des Verbrennungsmotors und einem Schaltgetriebe, das von einer Überwachungsvorrichtung (12) gesteuert wird, ausgestattet ist, wobei das Verfahren **dadurch gekennzeichnet ist, dass** es darin besteht, das Schaltgetriebe zu steuern, um die Vorwärtsbewegung des Fahrzeugs zu untersagen, wenn der Verbrennungsmotor wieder angelassen wird, um einen Bedarf des Fahrzeugs (13, 23, 33) zu erfüllen, und die vorbestimmten Bedingungen in Zusammenhang mit der Gegenwart oder Abwesenheit des Fahrers in dem Fahrzeug und der Gegenwart oder der Abwesenheit eines Hindernisses vor dem Fahrzeug (11, 21, 31) erfüllt sind.

2. Verfahren zur Steuerung nach Anspruch 1, **dadurch gekennzeichnet, dass** die Vorwärtsbewegung des Fahrzeugs untersagt wird, indem das Schaltgetriebe in eine Position gestellt wird, bei der kein mechanisches Drehmoment an die Räder des Fahrzeugs (24) übertragen wird.

3. Verfahren nach Anspruch 1 oder Anspruch 2, **dadurch gekennzeichnet, dass** die Bedingungen in Zusammenhang mit dem Fahrer das Anlegen des Sicherheitsgurts und/oder die Gegenwart des Fahrers auf seinem Sitz sind.

4. Verfahren nach Anspruch 1, **dadurch gekennzeichnet, dass** die Gegenwart oder die Abwesenheit eines Hindernisses durch ein Radarsystem, das sich an der Vorderseite des Fahrzeugs befindet, bestimmt wird.

5. Verfahren nach einem der Ansprüche 1 bis 4, **dadurch gekennzeichnet, dass** der Bedarf des Fahrzeugs das Aufladen der Batterie, der unzureichende Unterdruck des Bremssystems, das Einschalten der Klimaanlage oder der Belüftung des Fahrzeugs sein kann.

6. Verfahren nach einem der vorhergehenden Ansprüche, **dadurch gekennzeichnet, dass**, wenn der Verbrennungsmotor auf Betreiben des Fahrers (10, 30) wieder angelassen wurde, das Erfassen eines Hindernisses vor dem Fahrzeug ausgeführt wird, und, wenn ein Hindernis erfasst wird, die Überwachungsvorrichtung das Vorwärtsbewegen des Fahrzeugs untersagt, indem das Schaltgetriebe in eine Position positioniert wird, für die kein mechanisches Drehmoment an die Räder des Fahrzeugs (34) übertragen wird, und, wenn kein Hindernis erfasst wird, die Überwachungsvorrichtung die Vorwärtsbewegung des Fahrzeugs gestattet, indem sie das Schaltgetriebe in eine Position positioniert, in der ein mechanisches Drehmoment auf die Antriebsräder des Fahrzeugs (14) übertragen wird.

7. Verfahren nach einem der vorhergehenden Ansprüche, **dadurch gekennzeichnet, dass** die Überwachungsvorrichtung (22) nach einer vorbestimmten Zeit, während welcher das Vorwärtsbewegen des Fahrzeugs untersagt wird, das Schaltgetriebe in einer Position positioniert, bei der ein Drehmoment an die Antriebsräder des Fahrzeugs übertragen wird.

8. Verfahren nach Anspruch 7, **dadurch gekennzeichnet, dass** die vorbestimmte Zeit in der Nähe von zwei Sekunden liegt.
